# EUROPEAN PATENT APPLICATION

(11) **EP 1 369 941 A2**
(43) Date of publication of application: **10.12.2003**
(21) Application number: 03008871.0
(22) Date of filing: 29.04.2003
(51) Int. Cl.: H01M 8/02

(54) **Low-contact-resistance interface structure between separator and carbon material for fuel cell, separator and carbon material used therein, and production method**

(30) Priority: 16.05.2002 JP 2002142075
(71) Applicant: NIPPON STEEL CORPORATION, Tokyo 100-8071 (JP)
(72) Inventor: Kihira, Hiroshi, Nippon Steel Corporation, Futtsu-shi, Chiba 293-8511 (JP); Kaneko, Michio, Nippon Steel Corporation, Futtsu-shi, Chiba 293-8511 (JP); Akamatsu, Michio, Nippon Steel Corporation, Futtsu-shi, Chiba 293-8511 (JP); Homma, Hotaka, Nippon Steel Corporation, Futtsu-shi, Chiba 293-8511 (JP); Senuma, Takehide, Nippon Steel Corporation, Futtsu-shi, Chiba 293-8511 (JP)
(74) Representative: VOSSIUS & PARTNER

(57) **Abstract**

The present invention provides a low-contact-resistance interface structure between a separator and a carbon material for a fuel cell, a carbon material and a separator used in the interface structure, and a production method for a stainless steel separator for a fuel cell. The present invention is a low-contact-resistance interface structure between a separator and a carbon material for a fuel cell, characterized by having a titanium nitride layer 0.1 to 200 µm in thickness between the stainless steel separator and the carbon material contacting therewith. Further, the present invention is a method for producing a stainless steel separator incorporated in the above interface structure for a fuel cell, characterized by forming a titanium nitride layer 0.1 to 200 µm in thickness on one or both surfaces of a stainless steel containing, in mass,
C: 0.0005 to 0.03%,
Si: 0.01 to 2%,
Mn: 0.01 to 2.5%,
S: 0.01% or less,
P: 0.03% or less,
Cr: 13 to 30%, and
Ti: 0.05 to 5%,
with the balance consisting of Fe and unavoidable impurities, by applying a nitriding treatment to the stainless steel, in an atmosphere gas containing nitrogen, after the stainless steel is formed into a prescribed shape.

## Description

The present invention relates to an interface structure between a separator and a carbon material used as materials for members of a polymer electrolyte fuel cell that is used for an automobile operated directly by electric power, a small-scale power generating system or the like. It relates, more specifically, to a low-contact-resistance interface structure between a separator and a carbon material for a fuel cell, a separator and an electrode used in the structure, and a production method for a stainless steel separator for a fuel cell.

The development of a fuel cell for an electric vehicle has rapidly advanced over the last few years, accelerated by success in the development of a polymer electrolyte material. Unlike a conventional fuel cell of an alkali type, a phosphoric acid type, a fused carbonate type, a solid electrolyte type and so on, a polymer electrolyte fuel cell is the one characterized by using an organic film of a hydrogen-ion selective transmission type as an electrolyte.

A polymer electrolyte fuel cell is a system for generating electric power by using pure hydrogen or a hydrogen gas, obtained by reforming alcohols or the like, as fuel and by electrochemically controlling the reaction of the fuel with oxygen in the air. Although a polymer electrolyte film is thin, an electrolyte is fixed therein and, therefore, the film functions as an electrolyte as long as the dew point in a fuel cell is properly controlled. Therefore, it is not necessary to use a fluid medium such as an aqueous solution type or fused-salt type electrolyte. As a consequence, this type of fuel cell is characterized also in that it can be designed as a compact and simple unit.

The stainless steels for fuel cells hitherto known to the public include: a corrosion-resistant stainless steel for a fused carbonate type fuel cell disclosed in Japanese Unexamined Patent Publication No. H4-247852; a highly corrosion-resistant steel sheet for a separator of a fused carbonate type fuel cell disclosed in Japanese Unexamined Patent Publication No. H4-358044; a stainless steel excellent in corrosion resistance to fused-salt and the method for producing the stainless steel disclosed in Japanese Unexamined Patent Publication No. H7-188870; a stainless steel excellent in resistance to fused carbonate disclosed in Japanese Unexamined Patent Publication No. H8-165546; and a stainless steel excellent in resistance to corrosion by fused carbonate disclosed in Japanese Unexamined Patent Publication No. H8-225892.

As stainless steels for fuel cells operating in a high temperature environment where high corrosion resistance is required, materials for a solid electrolyte type fuel cell operating at high temperatures of several hundred degrees Celsius have been invented, those materials including metal materials for a solid electrolyte type fuel cell disclosed in Japanese Unexamined Patent Publication Nos. H6-264193 and H6-293941 and a ferritic stainless steel disclosed in Japanese Unexamined Patent Publication No. H9-67672.

On the other hand, as component materials of a polymer electrolyte fuel cell operating in a temperature range not exceeding 150°C, carbon-base materials have been used for the reasons that the temperature is not so high and that corrosion resistance and durability can be fully secured in such an environment. In consideration of the needs for price reduction as well as weight and size reduction, however, the research and development of a stainless steel separator has also been taken up.

A polymer electrolyte fuel cell is formed by arranging, in layers: catalytic electrodes each of which consists of carbon particulates and precious metal ultrafine particulates attached to both the surfaces of a polymer electrolyte film functioning as an electrolyte; current collectors each of which consists of a felt-like carbon fiber aggregate (a carbon paper), the current collectors having the functions of extracting electric power generated at the catalytic electrodes in the form of an electric current and, at the same time, supplying reactive gasses to the catalytic electrodes; separators for receiving the electric current from the current collectors and, at the same time, separating two kinds of reactive gasses, one mainly composed of oxygen and the other mainly composed of hydrogen, and a cooling medium, from each other; and other components.

A carbon material has so far been used also as this kind of separator. However, considering the case of installing a fuel cell in an automobile, the fuel cell has the problems of a high cost and a large size. Against this background, the application of a stainless steel to a fuel cell member such as a separator is being studied.

The present inventors have already disclosed the specific shape and chemical composition of a stainless steel in the case of using it as a member, such as a separator, of a polymer electrolyte fuel cell in Japanese Unexamined Patent Publication Nos. 2000-260439 and 2000-256808. However, the fact that the contact resistance between a stainless steel separator and a carbon paper that is used as a current collector is high and therefore the energy efficiency of a fuel cell is significantly lowered has been pointed out as a problem of a stainless steel separator.

Note that the problem in contact resistance with a carbon paper is peculiar to a stainless steel wherein the existence of a passivated film having a finite resistance value constitutes the essence of corrosion resistance. However, for instance, though the "2001 Annual Progress Report/ Fuel Cell for Transportation" published from the U.S. Department of Energy describes a study on improving corrosion resistance of an Ni-Ti or Fe-Ti alloy by covering the surfaces with TiN when the alloy is used as a bipolar plate, the publication does not at all recognize the subject of contact resistance at a surface of a stainless steel.

In view of this situation, low-contact-resistance materials for members of a polymer electrolyte fuel cell, which materials allow to maximize the energy conversion efficiency of the fuel cell, are being studied through investigation of the contact resistance between materials used.

As an example of those kinds of inventions, Japanese Unexamined Patent Publication No. H10-228914 already discloses a fuel cell separator produced by: forming bulges composed of a plurality of jogs at the inner periphery portion of the separator by applying press-forming to a SUS304 stainless steel; and then forming a gold plating layer 0.01 to 0.02 µm in thickness on each end face of the bulged tip side. As another example thereof, Japanese Unexamined Patent Publication No. 2001-6713 discloses a stainless steel, titanium, a separator and the like, having low contact resistance and being used for a polymer electrolyte fuel cell, those being characterized by depositing a precious metal or a precious metal alloy on the portion that contacts with another member and develops contact resistance.

In any of those inventions, a precious metal is used for lowering contact resistance and, from the viewpoints of further reducing costs and saving rare resources, a method for lowering contact resistance without using a precious metal has been sought.

As a measure to avoid the use of a precious metal, Japanese Unexamined Patent Publication No. 2000-309854 discloses a technique of lowering contact resistance by having chromium and carbon in a stainless steel precipitate during annealing and securing electric conduction through the chromium carbide precipitates that have disposed to the surface through a passivated film.

However, this invention has the serious problems that: the annealing process of a stainless steel requires too much time and thus the invention entails low productivity and a high production cost; in contrast with this, if the annealing time is shortened to reduce the production cost, chromium-depleted layers develop metallographically around the periphery of chromium carbide that is precipitated and thus deteriorate corrosion resistance; and, on top of these problems, while a heavy working process is indispensable for the forming of a separator, if a large amount of chromium carbide precipitates in the metallographic structure before the working is applied, cracks develop during the working process.

The object of the present invention is, in view of the situation described above, to provide: a low-contact-resistance interface structure between a separator and an electrode for a fuel cell, the interface structure making it possible to avoid the use of a precious metal, to form a separator, and to lower contact resistance to a carbon material while corrosion resistance is fully maintained; an electrode and a separator used in the interface structure; and a production method of a stainless steel separator for a fuel cell.

The present inventors, as a result of the intensive studies on a low-contact-resistance interface structure between a separator and a carbon material wherein a precious metal was not used, discovered that titanium nitride had the effect of lowering contact resistance, and established the present invention. The gist of the present invention is as follows:
(1) A low-contact-resistance interface structure between a separator and a carbon material for a fuel cell, characterized by having a titanium nitride layer 0.1 to 200 µm in thickness between the stainless steel separator and the carbon material in contact therewith.
(2) A low-contact-resistance interface structure between a separator and a carbon material for a fuel cell according to the item (1), characterized by forming said titanium nitride layer on one or both surfaces of the stainless steel separator and/or one or both surfaces of the carbon material.
(3) A low-contact-resistance interface structure between a separator and a carbon material for a fuel cell according to the item (1) or (2), characterized in that all or a part of the titanium nitride in said titanium nitride layer is in the form of a particulate.
(4) A carbon material for a fuel cell, the carbon material being used as an electrode in a low-contact-resistance interface structure between a separator and an electrode for a fuel cell according to any one of the items (1) to (3), characterized by having a titanium nitride layer 0.1 to 200 µm in thickness on the surface contacting with the stainless steel separator.
(5) A stainless steel separator for a fuel cell, the stainless steel separator being used in a low-contact-resistance interface structure between a separator and a carbon material for a fuel cell according to any one of the items (1) to (3), characterized by having a titanium nitride layer 0.1 to 200 µm in thickness on the surface contacting with the carbon material.
(6) A production method of a stainless steel separator for a fuel cell, characterized by forming a titanium nitride layer 0.1 to 200 µm in thickness on one or both surfaces of a stainless steel containing, in mass,
   C: 0.0005 to 0.03%,
   Si: 0.01 to 2%,
   Mn: 0.01 to 2.5%,
   S: 0.01% or less,
   P: 0.03% or less,
   Cr: 13 to 30%, and
   Ti: 0.05 to 5%,
   with the balance consisting of Fe and unavoidable impurities, by applying a nitriding treatment to the stainless steel in an atmosphere gas containing nitrogen after the stainless steel is formed into a prescribed shape.
(7) A production method of a stainless steel separator for a fuel cell according to the item (6), characterized in that said stainless steel further contains, in mass, one or more of
   Ni: 1 to 25%,
   Cu: 0.1 to 3%, and
   Mo: 0.1 to 7%.
(8) A production method of a stainless steel separator for a fuel cell according to the item (6) or (7), characterized in that: the dew point of the atmosphere in said nitriding treatment is -20°C or lower; the treatment temperature is 800 to 1,300°C; and the treatment time is ten seconds to one hour.
(9) A production method of a stainless steel separator for a fuel cell according to any one of the items (6) to (8), characterized in that said atmosphere gas containing nitrogen is ammonia cracking gas or pure nitrogen.

It is generally considered that the electrical resistance developed at a contact portion between a stainless steel functioning as a separator and a carbon material, such as a carbon paper, functioning as an electrode is caused by an oxide film, referred to as a passivated film, on a surface of the stainless steel. However, according to the analysis of the present inventors, the cause is not limited only to this.

That is to say, a nonlinear resistance component is created by the Schottky barrier occurring on the side of a carbon material caused by the difference in the Fermi levels between a stainless steel and the carbon material contacting with each other, and the addition of this nonlinear resistance component causes the phenomenon of an abnormally high contact resistance.

This means that it is possible to significantly lower contact resistance between a stainless steel and a carbon material by controlling the electronic structure at the contact interface and, by so doing, taking measures to form an interface density level under which the Schottky barrier is mitigated or tunneled through.

The present inventors studied intermediate materials, other than precious metals, existing at the interface between a stainless steel and a carbon material and satisfying the above condition and, as a result, discovered that the presence of titanium nitride produced such an effect. The present invention was established on the basis of this discovery.

In practical use, the most potent measure in obtaining titanium nitride is to form a titanium nitride layer on a surface of a Ti containing stainless steel by applying nitriding treatment to the stainless steel. However, what is effective for reducing contact resistance at an interface between a stainless steel and a carbon material is simply the presence of titanium nitride between the two materials and, in this sense, it is not always necessary to form titanium nitride on the side of the stainless steel surface.

In other words, a sufficient effect can be expected also when titanium nitride simply deposits on a surface of a carbon material. Further, in the case where titanium nitride deposits or precipitates on the surfaces of both the materials, the effect of lowering the contact resistance is the largest.

An effective method other than the method of applying nitriding treatment to a surface of a stainless steel sheet is the application of titanium nitride powder. This method is applicable to a surface of either a stainless steel or a carbon material, and also to a surface of a stainless steel already subjected to nitriding treatment. A desirable grain size of the powder is #300 or so. When the powder is too coarse, it does not stick to a surface. On the other hand, when the powder is too fine, it is difficult to handle owing to agglutination and, in addition, the titanium nitride layer is likely to be uneven. The titanium nitride may be applied either by painting with a brush in the form of powder or by painting using a volatile solvent in which the powder is dispersed. Titanium nitride powder is easily available in the form of a reagent having 99% purity or so. A purity higher than 99% is acceptable. However, even if the purity exceeds 99%, the effect of lowering contact resistance is not enhanced any more.

The purpose of forming a titanium nitride layer is to introduce a change in an electronic structure at the surface of a carbon material contacting face to face with a stainless steel, and the effect begins to appear when the thickness of the layer reaches 0.1 µm or more. When the thickness is too large, the contact resistance increases caused by the resistance of titanium nitride itself and, at the same time, the treatment requires a longer time, resulting in a cost increase. For this reason, it is desirable to control the thickness to 200 µm at the most.

As described above, the most dominant measure in forming a titanium nitride layer is to form it on a surface of a stainless steel through a nitriding treatment wherein the Ti-containing stainless steel is heated in an atmosphere containing nitrogen. Therefore, the measure is explained below in detail.

In the first place, the chemical components of a stainless steel are explained. The percentage figures are in mass percent.

C is known to create a chromium-depleted layer and thus deteriorate corrosion resistance of a stainless steel as chromium carbide precipitates, particularly, at crystal grain boundaries. In addition, solute C is known to anchor dislocations and thus deteriorate workability. For these reasons, it is desirable to lessen the amount of C. However, the complete removal of C at a refining process requires much expenditure. Considering the above situation, the C content is determined to be in the range from 0.0005 to 0.03%.

Si is necessary as a deoxidizing agent for producing a stainless steel and, as such, it has to be added to 0.01% at the least. It also has a positive effect on the stress corrosion cracking susceptibility of an austenitic stainless steel and, for this reason, it can be added, up to a maximum of 2%, within the range wherein formability is not adversely affected.

Mn must be added by 0.01% or more for improving hot workability during production and may be added, up to a maximum of 2.5%, for controlling the deoxidizing function, the workability and the percentage of austenite.

S and P are elements detrimental to corrosion resistance and it is desirable to reduce their contents. For this reason, the contents of S and P are determined to be 0.01% or less and 0.03% or less, respectively. It is desirable from the viewpoint of steelmaking costs to set the lower limit of the content of each of them at 0.001%.

Cr is the principal element that sustains the corrosion resistance of a stainless steel and, as such, an addition of Cr by at least 13% is required. When it is added excessively, on the other hand, it becomes difficult to process the material and also to produce it. For this reason, the upper limit of the addition amount of Cr is set at 30%.

The most important feature of the present invention is that a stainless steel according to the present invention acquires low contact resistance to carbon by: forming the stainless steel into the shape of a separator; subjecting it to a nitriding treatment in an atmosphere containing nitrogen; and, by so doing, having Ti contained in the steel precipitate in a small amount on the surface in the form of titanium nitride. Therefore, Ti is an indispensable additional element for forming a titanium nitride layer and materializing the present invention. The least addition amount of Ti required for obtaining the effect of the present invention is 0.05%. When the addition amount of Ti is over 5%, however, inclusions precipitate excessively, toughness and other properties are deteriorated, and it becomes difficult to form a stainless steel into a separator. A desirable range of the addition amount is from 0.1 to 2%.

Ni is an element capable of sustaining corrosion resistance and, at the same time, improving workability. From the viewpoint of cost, a ferritic stainless steel not containing Ni is advantageous and, for this reason, it must be added selectively. However, when heavy working is applied, an austenitic stainless steel must be used and therefore Ni must be added. In addition, when a stainless steel is used as a fuel cell separator, the growth of an oxide film is inhibited and corrosion resistance is enhanced as the Ni content increases. Therefore, the addition of Ni is desirable from this point of view. When Ni is added, it must be added to 1% or more, or otherwise no tangible effects are obtained. On the other hand, the effects of Ni are virtually saturated with an addition of 25%, and therefore the addition of more than 25% does not justify the cost. For this reason, the upper limit thereof is set at 25%.

Cu, like Ni, is also an element that improves workability and corrosion resistance. Its effects begin to appear when it is added by 0.1% and, therefore, it must be added by 0.1% or more in a selective manner. However, when it is added in excess of 3%, precipitates are formed to cause a problem in the homogeneity of a passivated film and, consequently, the corrosion resistance is deteriorated.

Mo improves corrosion resistance significantly when it is added in combination with Cr. The effect begins to appear when it is added by 0.1% and, therefore, it must be added by 0.1% or more in a selective manner. However, when it is added in excess of 7%, the steel hardens and it becomes difficult to process and produce it.

With regard to a high temperature heat treatment for nitriding, any method of surface nitriding may be employed as long as a stainless steel separator according to item (3) can be produced. For example, the recommendable conditions of a desirable method are as follows: the dew point of a treatment atmosphere is -20°C or lower; the temperature is 800 to 1,300°C; and the treatment time is in the range from ten seconds to one hour. As an atmosphere gas containing nitrogen, it is preferable to use ammonia cracking gas or pure nitrogen.

In the production processes of a stainless steel other than a nitriding treatment, it is desirable that titanium be contained in a stainless steel in the form of a solid solution during all the process steps including steelmaking, hot rolling, pickling of a hot rolled sheet, cold rolling, continuous annealing, pickling for descaling, foil rolling and bright annealing. It is also desirable that a heat treatment be so applied that a stainless steel is as soft as possible during the processes up to the forming of a separator. In that sense, it is desirable that a stainless steel be subjected to annealing in an inert gas atmosphere or bright annealing in a pure hydrogen atmosphere, each of which annealing bears the condition that C or N is hardly taken into the interior or the surface of the steel material from the outside thereof until the steel material is formed into a sheet or a foil material.

Note that, there may be a case where a flat sheet or a foil is used for a separator and forming is not necessarily applied. In such a case, it is possible to give a stainless steel the function specified in the present invention by properly controlling the atmosphere in a bright annealing furnace that constitutes the final process in the production of the sheet or foil material. A stainless steel sheet or foil thus produced is sometimes required to be hardened through rolling and/or heat treatment of the material from the viewpoint of the importance of the stability of an electric contact point and the springiness.

As described above, the present invention significantly lowers the contact resistance of a member without using a precious metal or the like and thus contributes to the promotion of the practical use of a polymer electrolyte fuel cell, the contact resistance having been a problem when a stainless material having a lower cost and allowing more intensive compaction than a conventional carbon material is applied to a material for a separator in a polymer electrolyte fuel cell. The fuel cell is viewed as a promising device to be used in place of a combustion engine of an automobile or a portable power generator.

### Example 1

Various kinds of stainless steel sheets 2 mm in thickness were produced under laboratory conditions through the processes of melting, hot rolling, pickling for descaling, cold rolling, and bright annealing in a hydrogen gas flow. Specimens were prepared by cutting the sheets thus obtained into discs 30 mm in diameter. The nitriding treatment was carried out in an ammonia cracking gas having a dew point controlled to -30°C and under a standard condition of 1,100°C for 60 sec. Some specimens were treated for longer periods of time for the purpose of determining the upper limit of titanium nitride film thickness.

Contact resistance was measured by: placing two jigs at the top and bottom, each having a disc-shaped current supplying surface 30 mm in diameter; between the jigs, sandwiching two disc-shaped gold-plated copper plates 30 mm in diameter and 4 mm in thickness for measuring electric potential, a carbon paper, and a stainless steel sheet 30 mm in diameter and 2 mm in thickness, the stainless steel sheet being the object to be measured ; putting a weight on the top of the pile so that the bearing pressure at the contact surfaces was 7 kg/cm²; applying a constant current having a current density of 1.0 A/cm²; and measuring the potential difference between the disc-shaped gold-plated copper plates for measuring electric potential and the stainless steel sheet.

Contact resistance between gold and a carbon paper was determined by: sandwiching a carbon paper between two disc-shaped gold-plated copper plates; dividing the potential difference value measured between the two disc-shaped gold-plated copper plates by the current density value; and then, further dividing the dividend by two. Therefore, the resultant contact resistance value includes the resistance value of a half of the thickness of the carbon paper.

Contact resistance between a stainless steel and a carbon paper was determined by: measuring the potential difference between both the ends of the pile of the stainless steel, the carbon paper and the gold-plated copper plates; dividing the measured potential difference value by the current density value to obtain the total resistance value; and subtracting the contact resistance value between the gold and the carbon paper from the total resistance value.

Table 1 shows the results of investigating the relationship between the Ti contents in the stainless steels and the contact resistance reduction effects, with the amounts of chemical components except Ti maintained at the identical levels. "Nitriding" in the column "Treatment" represents the aforementioned nitriding treatment in the atmosphere containing nitrogen. When the Ti content was increased to 0.05% or more, the value of the contact resistance decreased to 100 mΩcm² or less and it was understood that the effect of the present invention was obtained. As a result of analyzing the surfaces of the invention samples by ESCA, titanium nitride was detected in the samples processed through the nitriding treatment in the atmosphere containing nitrogen. The thickness of titanium nitride was determined by: measuring the distributions of Ti and N in the depth direction through the depth analysis by AES; and converting the distributions into the thickness of the titanium nitride using a calibration curve based on spattering time. The results are shown in the tables 1 - 6.

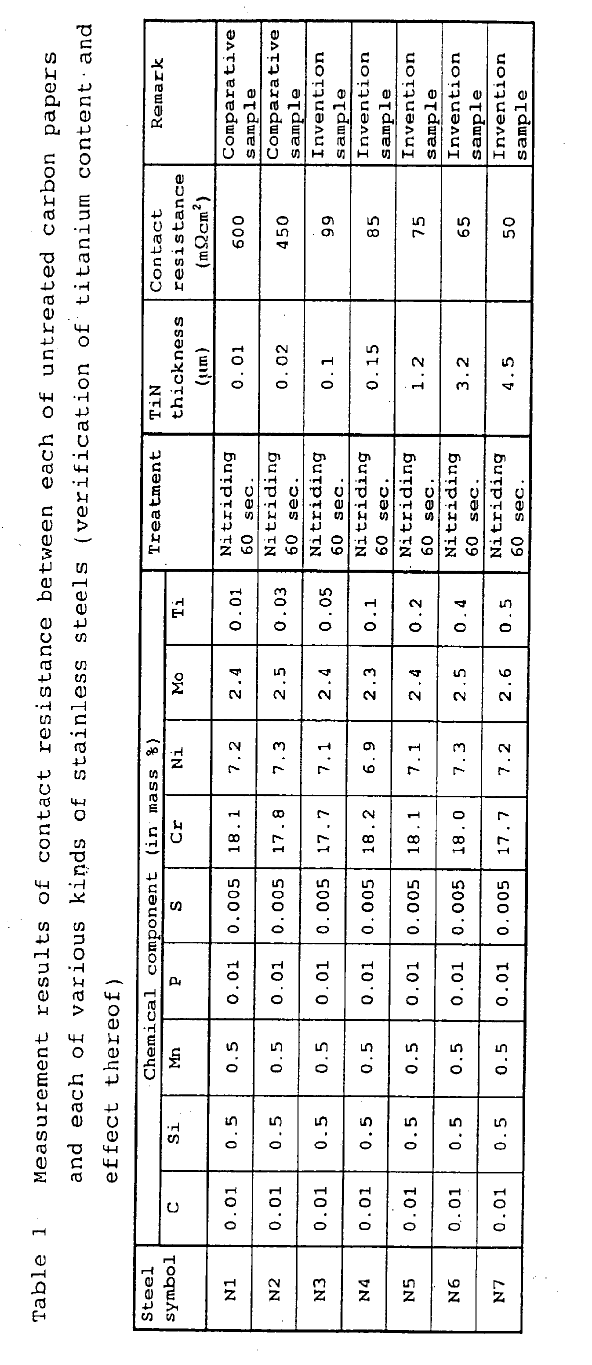

Table 2 is the list of the results of measuring the contact resistance when the titanium nitride films were made to grow intentionally by extending the time of the nitriding treatment in the atmosphere containing nitrogen for the purpose of determining the upper limit of the thickness of the titanium nitride that allowed the effect of the present invention to show up while the thickness of the titanium nitride was increased. It was understood that the contact resistance began to increase and the effect of the present invention to decrease when the thickness of the titanium nitride exceeded 200 µm.

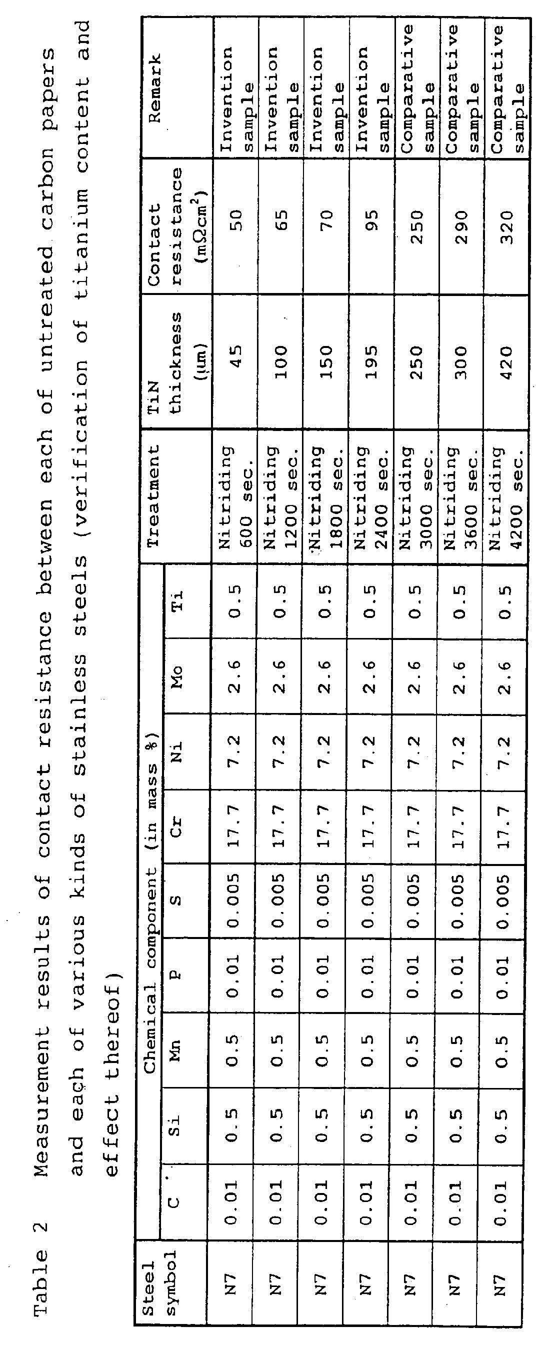

Table 3 is the list of the results of measuring the contact resistance of the specimens prepared by changing the chemical components of the base materials in wider ranges and not applying nitriding treatment. In the cases where the treatment according to the present invention was not applied, as there was no titanium nitride layer, all the specimens exhibited very large values of the contact resistance to the carbon paper.

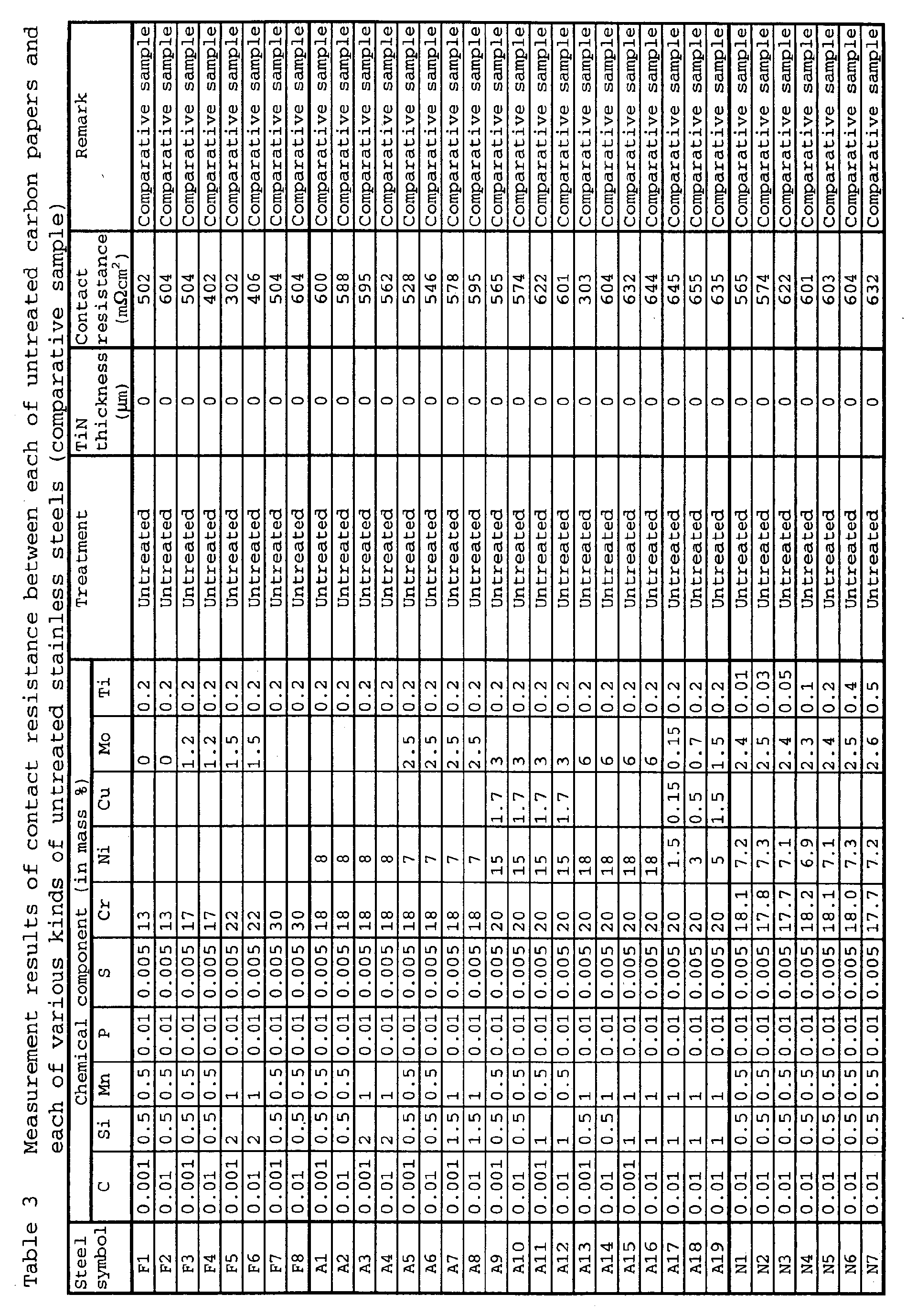

Table 4 shows the results of measuring the contact resistance of the stainless steels to the carbon papers after the stainless steels having the same chemical components as those shown in Table 3 were subjected to the nitriding treatment in the atmosphere containing nitrogen. It was clarified from the table that any of the stainless steels having a Ti content of 0.05% or more showed a contact resistance value of 100 mΩcm² or less. A contact resistance lower than the above value is generally required in an actual application. However, it is suggested that the contact resistance obtained in the above cases can be improved by further optimizing the conditions of the nitriding treatment.

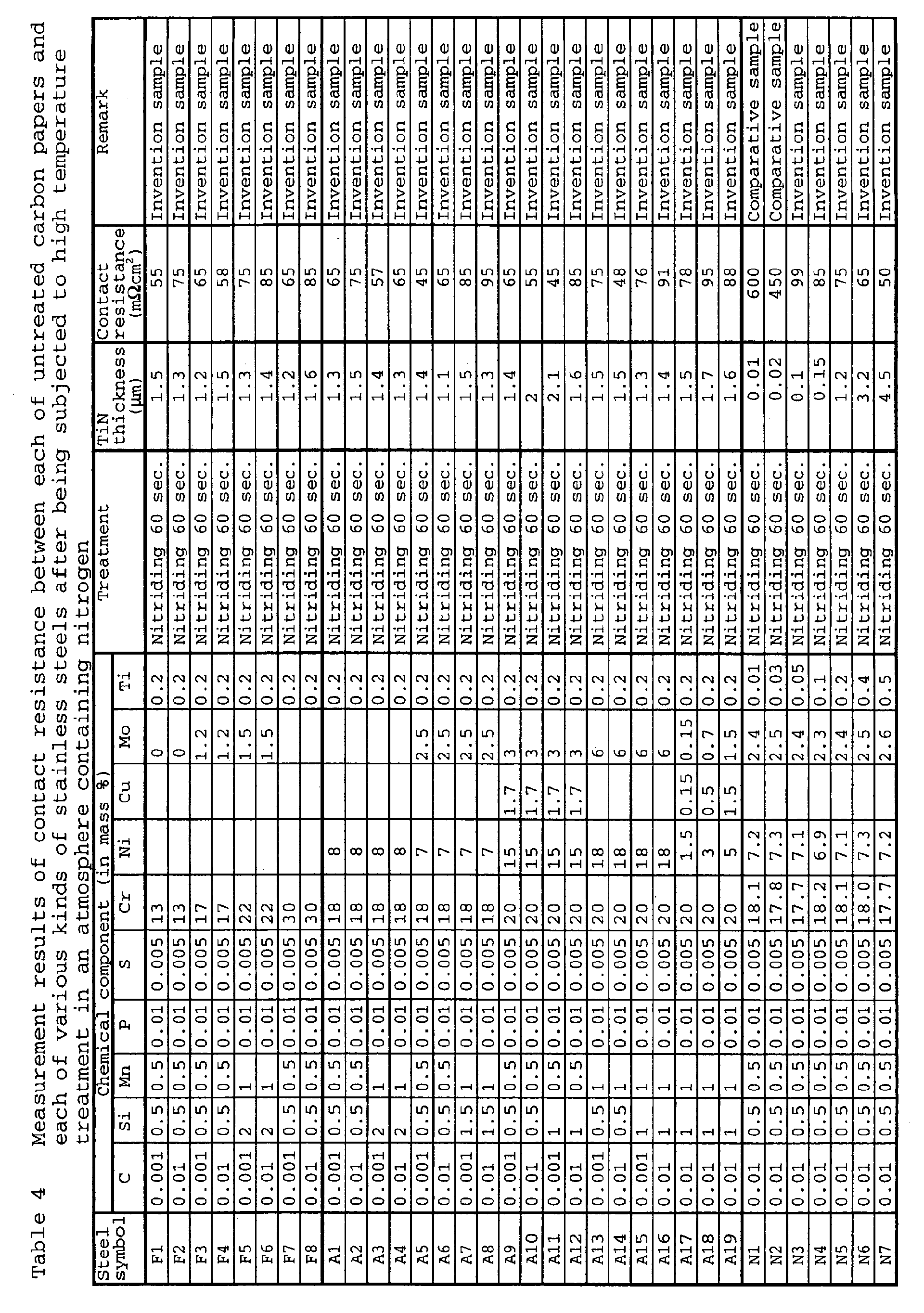

Meanwhile, considering the fact that an electronic structure at a surface of a carbon paper has a significant influence on an increase in contact resistance, there is a possibility that a contact resistance reduction effect is obtained when titanium nitride is attached to a surface of a carbon paper. In view of this, a small amount of #300 titanium nitride powder of 99% purity was applied to commercially available carbon papers, each of the carbon papers was made to contact with each of the various kinds of stainless steels, and the contact resistance was measured.

Table 5 shows the contact resistance values between the various kinds of stainless steels not subjected to nitriding treatment and the carbon papers to which titanium nitride was attached (representing the cases where titanium nitride existed on the surfaces of the carbon materials), and Table 6 shows the contact resistance values between the various kinds of stainless steels subjected to the nitriding treatment in a nitrogen atmosphere and the carbon papers to which titanium nitride was attached (representing the cases where titanium nitride existed on both the surfaces of the stainless steels and the carbon materials). The tables show that all of the cases exhibited the effect of lowering the contact resistance. As seen in Table 6, when titanium nitride was attached to the surface of a carbon paper and a stainless steel containing 0.05% titanium was subjected to a high temperature treatment in an atmosphere containing nitrogen, a contact resistance value suitable for withstanding practical use was realized.

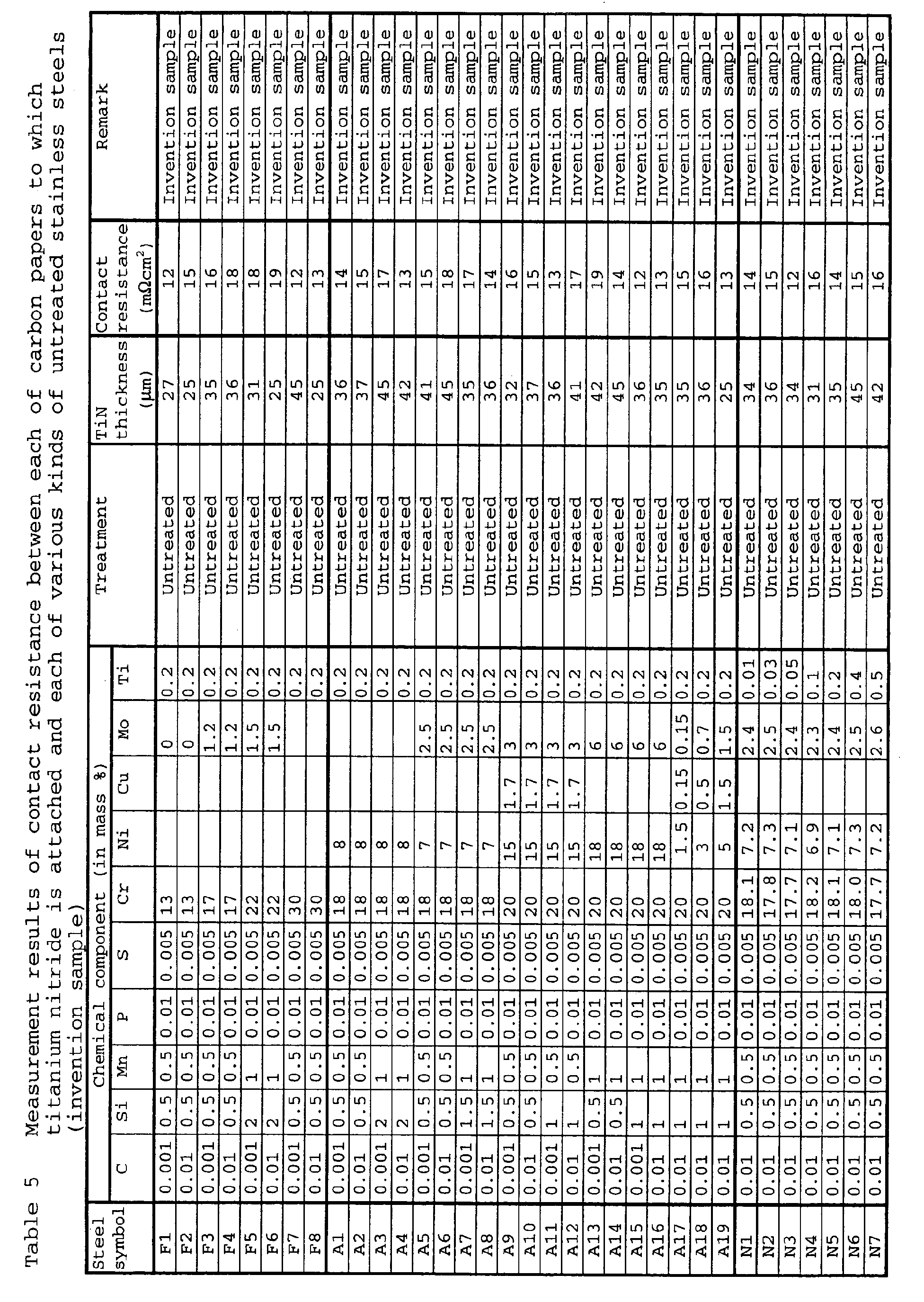

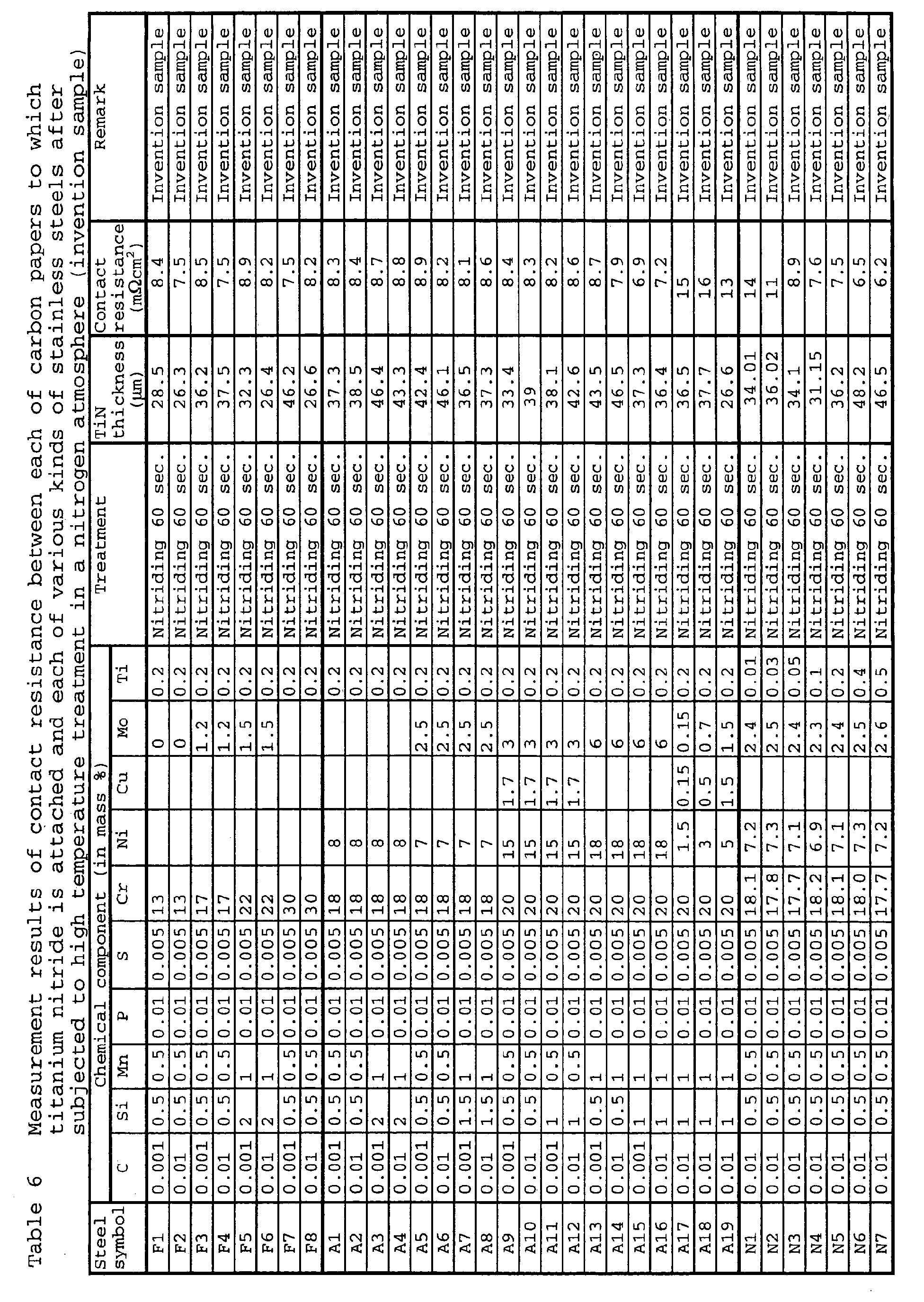

From the series of the measurement results described above, it was clarified that a low-contact-resistance interface structure not requiring the application of a precious metal, which had previously been required, could be provided by means of interposing titanium nitride between a stainless steel and a carbon material contacting therewith.

### Example 2

In Example 2, the present invention was applied to the structures of actual fuel cells, and the current density in each cell structure was examined.

The separators were formed using the stainless steel N5 in Table 1 as the base material. The paste of fine carbon powder containing platinum was applied to the polymer electrolyte films that were available in the market and dried. The fuel cells were manufactured from the above materials and using the carbon papers as the current collectors.

The performance of the fuel cells was verified through the tests wherein pure hydrogen and artificial air (20% O₂ and 80% N₂) were supplied under atmospheric pressure to the hydrogen electrode and the oxygen electrode, respectively, as fuel gasses, each of the fuel cells was held in a high temperature chamber so that the temperature of the entire cell was maintained at 90°C, and the electric current flowing outside the cell, in the direction from the positive electrode to the negative electrode, was measured.

The size of the electrodes used for the tests was 20 x 20 mm. The separators used for the tests were prepared, considering corrosion resistance, by subjecting the stainless steel foils processed in a thickness of 0.1 mm to press forming and thus forming grooves and holes that function as the passages of the gasses and the cooling water and by subjecting them to the high temperature treatment in the nitrogen atmosphere as described above.

For comparison, the performance of fuel cells in which stainless steel separators and/or carbon separators not subjected to nitriding treatment were incorporated was also examined. The results are shown in Table 7.

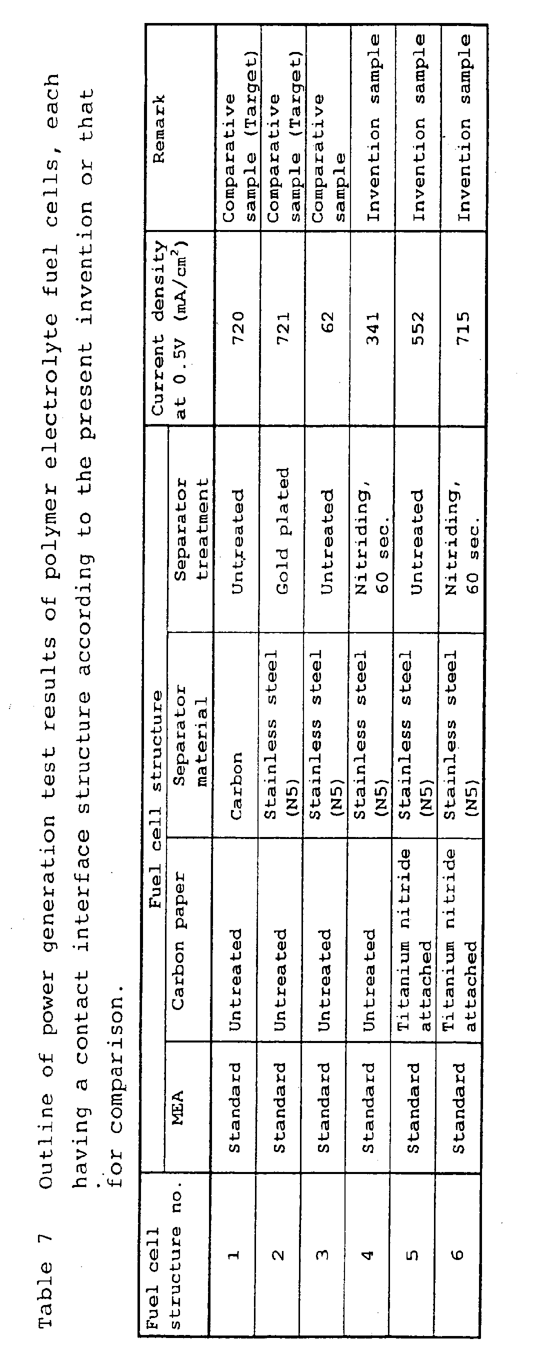

In the cases of the fuel cell structure No. 1 wherein carbon separators were used and the fuel cell structure No. 2 wherein gold-plated stainless steel separators were used, the current densities of 720 and 721 mA/cm² were obtained, respectively, when an electromotive voltage of 0.5 V was imposed, the two types of structures being regarded as the standards in conventional technologies. The above current densities were used as the reference figures indicating a target performance.

In the case of the fuel cell structure No. 3 wherein the fuel cell was constructed using untreated stainless steel separators and untreated carbon papers, the resultant current density was as small as 62 mA/cm². The value constituted a reference figure embodying the problems of conventional technologies.

The fuel cell structure No. 4 was the case that showed the result of investigating the effect of the high temperature treatment in a nitrogen atmosphere on the stainless steel separators according to the present invention, and the resultant current density was 341 mA/cm².

The fuel cell structure No. 5 was the case that showed the result of investigating the effect of the titanium nitride deposition on the carbon papers according to the present invention, and the resultant current density was 552 mA/cm².

The fuel cell structure No. 6 was the case that showed the result of the combined effects of the high temperature treatment in a nitrogen atmosphere on the stainless steel separators according to the present invention and of the titanium nitride deposition on the carbon papers according to the present invention, and the resultant current density was 715 mA/cm². This indicated that a target performance comparable to the carbon separator and to the gold-plated separator was virtually achieved.

## Claims

1. A low-contact-resistance interface structure between a separator and a carbon material for a fuel cell, **characterized by** having a titanium nitride layer 0.1 to 200 µm in thickness between the stainless steel separator and the carbon material contacting therewith.

2. A low-contact-resistance interface structure between a separator and a carbon material for a fuel cell according to claim 1, **characterized by** forming said titanium nitride layer on one or both surfaces of the stainless steel separator, or one or both surfaces of the carbon material.

3. A low-contact-resistance interface structure between a separator and a carbon material for a fuel cell according to claim 1 or 2, **characterized in that** all or a part of the titanium nitride in said titanium nitride layer is in the form of a particulate.

4. A carbon material for a fuel cell, the carbon material being used in a low-contact-resistance interface structure between a separator and an electrode for a fuel cell according to any one of claims 1 to 3, **characterized by** having a titanium nitride layer 0.1 to 200 µm in thickness on the surface contacting the stainless steel separator.

5. A stainless steel separator for a fuel cell, the stainless steel separator being used in a low-contact-resistance interface structure between a separator and a carbon material for a fuel cell according to any one of claims 1 to 3, **characterized by** having a titanium nitride layer 0.1 to 200 µm in thickness on the surface contacting with the carbon material.

6. A production method for a stainless steel separator for a fuel cell, **characterized by** forming a titanium nitride layer 0.1 to 200 µm in thickness on one or both surfaces of a stainless steel containing, by mass,
C: 0.0005 to 0.03%,
Si: 0.01 to 2%,
Mn: 0.01 to 2.5%,
S: 0.01% or less,
P: 0.03% or less,
Cr: 13 to 30%, and
Ti: 0.05 to 5%,
with the balance consisting of Fe and unavoidable impurities, by applying a nitriding treatment to the stainless steel in an atmosphere gas containing nitrogen after the stainless steel is formed into a prescribed shape.

7. A production method of a stainless steel separator for a fuel cell according to claim 6, **characterized in that** said stainless steel further contains, in mass, one or more of
Ni: 1 to 25%,
Cu: 0.1 to 3%, and
Mo: 0.1 to 7%.

8. A production method of a stainless steel separator for a fuel cell according to claim 6 or 7, **characterized in that**: the dew point of the atmosphere in said nitriding treatment is -20°C or lower; the treatment temperature is 800 to 1,300°C; and the treatment time is ten seconds to one hour.

9. A production method of a stainless steel separator for a fuel cell according to any one of claims 6 to 8, **characterized in that** said atmosphere gas containing nitrogen is ammonia cracking gas or pure nitrogen.
